# EUROPÄISCHE PATENTSCHRIFT

(11) **EP 0 945 031 B1**
(45) Veröffentlichungstag und Bekanntmachung des Hinweises auf die Patenterteilung: **20.03.2002**
(21) Anmeldenummer: 97951826.3
(22) Anmeldetag: 05.12.1997
(51) Int. Cl.: H04N 13/00

(54) **VERFAHREN UND SCHALTUNGSANORDNUNG ZUM KONVERTIEREN DES BILDFORMATES VON MIT ZEILENPOLARISATION HERGESTELLTEN DREIDIMENSIONALEN ELEKTRONISCHEN BILDERN**
PROCESS AND CIRCUIT ARRANGEMENT FOR CONVERTING THE FORMAT OF THREE-DIMENSIONAL ELECTRONIC IMAGES PRODUCED BY HORIZONTAL POLARISATION
PROCEDE ET AGENCEMENT DE CIRCUITS POUR TRANSFORMER LE FORMAT D'IMAGES ELECTRONIQUES TRIDIMENSIONNELLES FORMEES PAR POLARISATION HORIZONTALE

(30) Priorität: 18.12.1996 DE 1965280
(43) Veröffentlichungstag der Anmeldung: 29.09.1999
(73) Patentinhaber: Fujitsu Siemens Computers GmbH, 81739 München (DE)
(72) Erfinder: MAYER, Christoph, D-86159 Augsburg (DE); LOCKMANN, Klaus, D-33129 Delbrück (DE)
(74) Vertreter: Epping, Wilhelm, Dipl.-Ing.
(86) Internationale Anmeldenummer: DE9702844
(87) Internationale Veröffentlichungsnummer: WO9827746

(56) Entgegenhaltungen:
- DE-A- 3 234 557
- DE-A- 4 424 702
- DE-A- 19 531 760

## Beschreibung

Die Erfindung betrifft ein Verfahren zum Konvertieren des Bildformates von elektronisch erzeugten dreidimensionalen Bildern gemäß dem Oberbegriff des Anspruchs 1. Die Erfindung betrifft außerdem Schaltungsanordnungen zur Durchführungs des Verfahrens gemäß den Oberbegriffen der Ansprüche 7 und 8.

Dreidimensionale Bilder können auf elektronischem Weg durch Anwenden eines sogenannten Zeilenpolarisationsverfahren erzeugt werden. Das Prinzip des Zeilenpolarisationsverfahrens ist in der deutschen Offenlegungsschrift DE 195 31 760 A1 beschrieben.

Das Zeilenpolarisationsverfahren nutzt das Interlace-Verfahren bei Fernsehübertragungen aus. Beim Interlace-Verfahren werden immer abwechselnd ein erstes und ein zweites Halbbild gesendet, die kammförmig zu einem 3ild zusammengefasst werden.

Beim dreidimensionalen Sehen sind zwei Bilder für jeweils eines der Augen des Menschen notwendig, die zueinander entsprechend dem jeweils anderen Blickwinkel eines jeden Auges zum Motiv versetzt sind. Die beiden Halbbilder bei der Fernsehübertragung können jeweils eines dieser Bilder darstellen, wobei dafür gesorgt werden muss, dass das eine Halbbild in eine erste und das andere Halbbild in eine zweite Richtung polarisiert ist. Erreicht werden kann dies beispielsweise durch einen Polarisationsfilter auf der Frontscheibe des Bilddarstellungsgerätes, der die einzelnen Zeilen abwechselnd in die eine und andere Richtung polarisiert. Ist dies der Fall, kann mit einer entsprechenden Brille, die für das eine Auge das eine Bild und für das andere Auge das andere Bild herausfiltert, dreidimensional gesehen werden.

Ein Problem stellen heute die unterschiedlichen Auflösungs-Standards dar, in denen Bilder übertragen werden. Bekannte Auflösungs-Standards sind beispielsweise 625 Zeilen beim PAL-Übertragungsverfahren, 1250 Zeilen beim HDTV-Übertragungsverfahren und 575 Zeilen beim PAL Plus-Übertragungsverfahren. Ist ein elektronisches Bilddarstellungsgerät für einen der genannten Standards ausgelegt und ist dieses Bilddarstellungsgerät weiter darauf vorbereitet, zur dreidimensionalen Bilddarstellung die einzelnen Darstellungszeilen abwechselnd in die eine und andere Richtung zu polarisieren, kann ein in einem anderen Auflösungs-Standard übertragenes dreidimensionales Bild nicht mehr dargestellt werden, weil Zuordnung von polarisierten Zeilen des Bilddarstellungsgerätes und den übertragenen Halbbildern nicht mehr stimmt.

Aus der Druckschrift: Ost, Jürgen: Bildfernsprechen, kompatibel mit der Fernsehrundfunknorm. In Radio Mentos Elektronik, 1975, Nr. 5, Seiten 194 - 196 ist ein Verfahren zur Konvertierung des Bildformats von 313-zeiligen elektronischen Bildern in 625-zeilige Bilder durch Wiederholung jeder Zeile bekannt. Es sind keine Maßnahmen angesprochen, um bei der Konvertierung mit Zeilenpolarisation dreidimensionale Bilder herstellen zu können.

In DE 32 34 557 C2 ist eine "1250/100/4:1-Norm" beschrieben, die HDTV und 3D-Wiedergabe ermöglichen soll. Diese Norm basiert auf dem Umstand, daß sich Vollbilder jeweils aus vier Teilbildern zusammensetzen, die mit einer der doppelten Netzfrequenz entsprechenden Teilbildfrequenz in gegeneinander versetzten Rastern auf einen Farbfernsehbildschirm geschrieben werden.

Aufgabe der Erfindung ist es daher, ein Verfahren und Schaltungsanordnungen zum Konvertieren des Bildformates von mit Zeilenpolarisation hergestellten dreidimensionalen elektronischen Bildern anzugeben.

Diese Aufgabe wird ausgehend von einem Verfahren der eingangs genannten Art mit den im kennzeichnenden Teil des Anspruchs 1 angegebenen Verfahrensschritte gelöst. Die Aufgabe wird weiter durch Schaltungsanordnungen gelöst, die die kennzeichnenden Merkmale der Ansprüche 7 bzw. 8 aufweisen und, derart konfiguriert sind, das erfindungsgemäße Verfahren durchzuführen.

Durch das Verfahren bzw. die Schaltungsanordnungen wird erreicht, dass stets eine richtige Zuordnung von übertragenen Halbbildern zu den polarisierten Zeilen des Bilddarstellungsgerätes gegeben ist, unabhängig von dem Auflösungs-Standard, mit dem die Bilder übertragen und dargestellt werden. Fehlende Zeilen werden ergänzt. Zu viele Zeilen werden übersprungen. Die richtige Zuordnung der übertragenen Bildzeilen zu den jeweiligen polarisierten Darstellungszeilen wird, wo es notwendig ist, schließlich durch eine Zeilenvertauschung erhalten.

Es ist möglich, das Verfahren durch eine Software-Realisierung ablaufen zu lassen.

Vorteilhafte Weiterbildungen der Erfindung sind Gegenstand von Unteransprüchen.

Zum Kopieren von einzufügenden Zeilen können Verzögerungsleitungen mit entsprechenden Laufzeiten vorgesehen sein.

Interpolierte eingefügte Zeilen liefern weichere Übergange in den dargestellten dreidimensionalen Bildern.

Eine gleichmäßige Verteilung von einzufügenden bzw. zu überspringenden Zeilen verbessert ebenfalls das dargestellte dreidimensionale Bild.

Mit einem gegenseitigen Verschieben in der Ebene der zur dreidimensionalen Darstellung verwendeten beiden Halbbilder kann der dreidimensionale Seheffekt verstärkt oder abgeschwächt werden.

Werden die jeweils geraden bzw. ungeraden Zeilen mit dem Inhalt der jeweils vorangegangenen Zeile überschrieben, entsteht aus einem dreidimensionalen Bild ein zweidimensionales Bild. Mit dieser Maßnahme kann daher zwischen dreidimensionalem und zweidimensionalem Sehen hin- und hergeschaltet werden.

Nachfolgend wird die Erfindung anhand einer Zeichnung näher erläutert. Darin zeigen:
- Figur 1: eine erste Tabelle mit der Angabe von Zeilenzuordnungen für die Darstellung eines dreidimensionalen Bildes mit einer maximalen Bildauflösung,
- Figur 2: eine zweite Tabelle mit der Angabe von Zeilenzuordnungen gemäß der Erfindung bei einem Wechsel der Bildauflösung von einem PAL-System zu einem HDTV-System,
- Figur 3: eine dritte Tabelle mit der Angabe von Zeilenzuordnungen gemäß der Erfindung bei einem Wechsel der Bildauflösung von einem HDTV-System zu einem PAL-System,
- Figur 4: eine vierte Tabelle mit der Angabe von Zeilenzuordnungen gemäß der Erfindung bei einem Wechsel der Bildauflösung von einem PAL Plus-System zu einem PAL-System,
- Figur 5: eine fünfte Tabelle mit der Angabe von Zeilenzuordnungen gemäß der Erfindung bei einem Wechsel der Bildauflösung von einem System mit 500 Zeilen zu einem System mit 800 Zeilen,
- Figur 6: eine sechste Tabelle mit der Angabe von Zeilenzuordnungen bei einem Wechsel von einem dreidimensionalen Bild zu einem zweidimensionalen Bild,
- Figur 7: eine Tabelle mit der Angabe von Zeilenzuordnungen und Zeilenanfängen für eine Einstellung eines dreidimensionalen Seheffektes bei einem dreidimensionalen Bildes,
- Figur 8: ein Prinzipschaltbild für eine analoge Auflösungskonvertierung gemäß der Erfindung elektronisch erzeugter Bilder, und
- Figur 9: ein Prinzipschaltbild für eine digitale Auflösungskonvertierung gemäß der Erfindung elektronisch erzeugter Bilder.

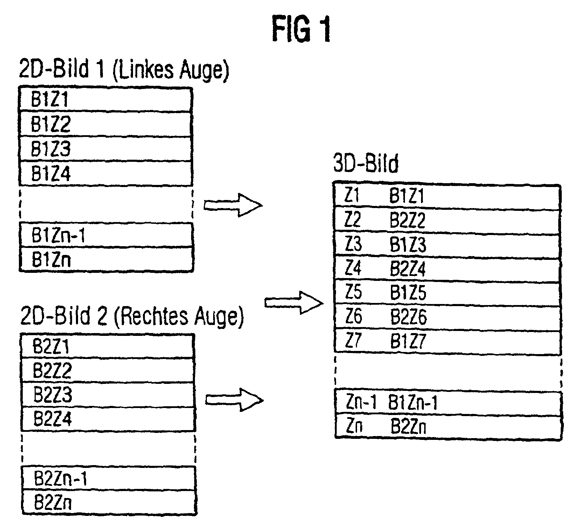

Figur 1 zeigt zwei zweidimensionale Bilder 2D-Bild 1 und 2D-Bild 2. Jedes dieser Bilder weist die gleich Zeilenauflösung von Zn Zeilen auf. Die Zeilenauflösung von Zn Zeilen entspricht der Zeilenauflösung des jeweils eines dieser Bilder zweidimensional darstellenden elektronischen Bilddarstellungsgerätes. Unter einem elektronischen Bilddarstellungsgerät soll dabei beispielsweise ein Röhrenbildschirmgerät oder ein LCD-Flachbildschirmgerät verstanden werden. Nachfolgend wird manchmal nur mehr kurz von einem Bildschirm gesprochen.

Wird jeweils eines dieser Bilder auf dem Bildschirm dargestellt, erscheint dieses Bild in der vollen Bildschirm-Auflösung, weil jeweils alle Zeilen des jeweiligen Bildes dargestellt werden. Soweit unterscheiden sich die beiden in der Figur 1 dargestellten Bilder 2D-Bild 1 und 2D-Bild 2 nicht von Bildern eines zweidimensionalen Films.

Um ein dreidimensionales Sehen zu ermöglichen, müssen die Zeilen des Bildschirms zeilenpolarisiert sein. Eine Möglichkeit der Zeilenpolarisation ist, jeweils die Zeilen mit ungerader Zeilennummern in die eine Richtung und jeweils die Zeilen mit geraden Zeilennummern in die andere Richtung zu polarisieren. Erreicht werden kann dies zum Beispiel mit einer entsprechenden Polarisationsfolie, die auf dem Bildschirm aufgebracht ist. Hat ein Betrachter einen zweiten Filter, zum Beispiel eine Polarisationsbrille mit einem ersten polarisierten Glas entsprechend der Polarisationsrichtung der einen der Polarisationsrichtungen der Polarisationsfolie des Bildschirms und mit einem zweiten polarisierten Glas entsprechend der Polarisationsrichtung der anderen der beiden Polarisationsrichtungen der Polarisationsfolie des Bildschirms, kann er dreidimensional sehen, wenn auf dem Bildschirm jeweils auf den einen polarisierten Zeilen Bilder für das eine Auge und auf den anderen polarisierten Zeilen Bilder für das andere Auge dargestellt werden.

Scheinbar halbiert sich durch das Zeilenpolarisationsverfahren die Bildschirm-Auflösung. Tatsächlich bemerkt das Auge des Menschen diesen Unterschied kaum, wenn zur Erstellung des dreidimensionalen Bildes 3D-Bild zwei Bilder mit der gleichen Auflösung verwendet werden, wie der 3D-Bildschirm insgesamt aufweist, wobei für die dreidimensionale Darstellung die ungeraden Zeilen des einen Bildes, zum Beispiel des 2D-Bildes 1 für das linke Auge, und die geraden Zeilen des anderen Bildes, zum Beispiel des 2D-Bildes 2 für das rechte Auge, verwendet werden.

Diesen Sachverhalt Figur 1 darzustellen, wobei sich dann beispielsweise ein 3D-Bild ergibt, dessen erste Zeile Z1 die erste Zeile des 2D-Bildes 1, nämlich B1Z1, darstellt, dessen zweite Zeile Z2 die zweite Zeile des 2D-Bildes 2, nämlich B2Z2, darstellt, dessen dritte Zeile Z3 die dritte Zeile des 2D-Bildes 1, nämlich B1Z3, darstellt, dessen vierte Zeile Z4 die vierte Zeile des 2D-Bildes 2, nämlich B2Z4, und so weiter darstellt, bis zur vorletzten Zeile Zn-1, die die vorletzte Zeile des 2D-Bildes 1, nämlich B1Zn-1, darstellt, und letzten Zeile Zn, die die letzte Zeile des 2D-Bildes 2, nämlich B2Zn, darstellt.

Ein Problem stellt heute die Tatsache dar, dass Fernsehbilder nicht mehr nur in einer einzigen Norm gesendet und dargestellt werden. Vielmehr gibt es heute mehrere Normen für Senden und Darstellen und es wird heute reichlich Gebrauch gemacht von diesen unterschiedlichen Normen. Um zu den verschiedenen Normen kompatibel zu sein, ist es notwendig, sich anpassen zu können. Werden beispielsweise Bilder in der einen Norm gesendet, sollen aber in der anderen Norm dargestellt werden, ist eine entsprechende Konvertierung der Bilder nötig.

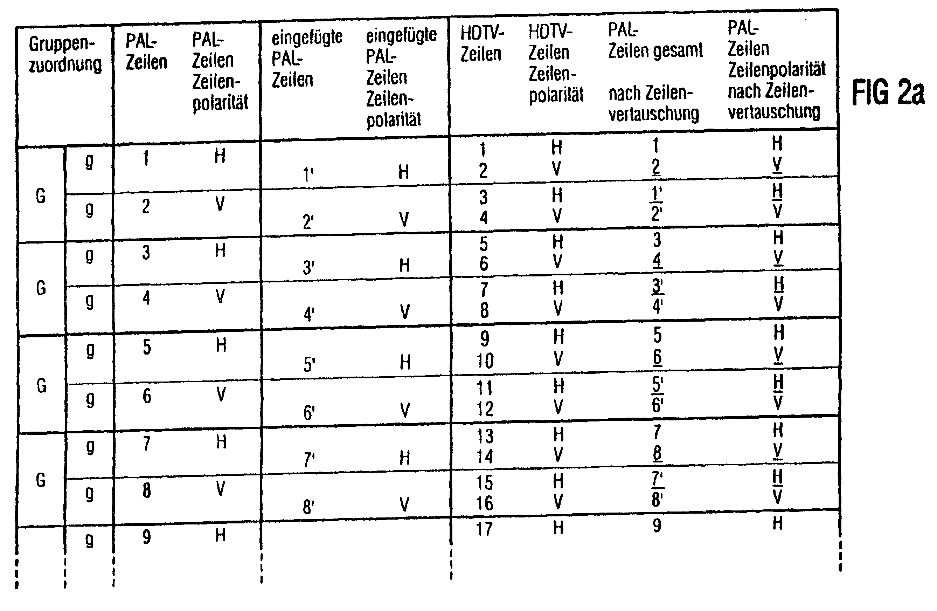

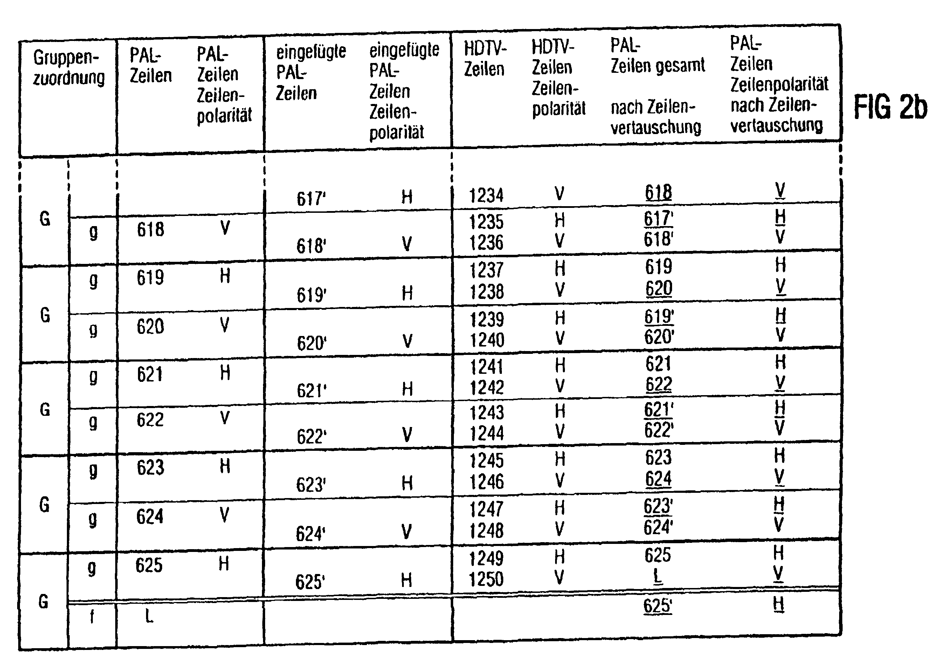

Figur 2 zeigt ein Beispiel einer Konvertierung dreidimensionaler Bilder, die im sogenannten PAL-System gesendet werden und mit einem für eine sogenannte HDTV-Darstellung geeigneten Bildschirm dargestellt werden. Andere Figuren zeigen andere Beispiele für Konvertierungen. Im PAL-System werden die Bilder mit einer Auflösung von 625 Zeilen gesendet, während ein Bildschirm mit HDTV-Auflösung die Bilder mit 1250 Zeilen darstellt. Angenommen ist, und das gilt auch für die anderen Konvergierungsbeispiele, dass in jedem übertragenen dreidimensionalen Bild zwei Halbbilder jeweils für das eine und das andere Auge enthalten sind. Das Halbbild für das eine Auge wird dabei in den Zeilen der einen Zeilenpolarisierung und das Bild für das andere Auge wird in den Zeilen der anderer. Zeilenpolarisierung übertragen.

Die verschiedenen Zeilenpolarisierungen sind in der Figur 2, wie auch in den anderen betreffenden Figuren, an zwei Buchstaben H und V kenntlich gemacht. Die Buchstaben H und V stehen für Horizontal und Vertikal. Horizontal bedeutet, dass diese Zeilen horizontal polarisiert sein sollen. Vertikal bedeutet, dass diese Zeile vertikal polarisiert sein sollen. Entscheidend ist, dass immer zwei aufeinanderfolgende Zeilen abwechselnd in die eine und andere Richtung polarisiert sind.

Figur 2 zeigt mehrere Spalten, die unterschiedlich beschriftet sind. Eine erste Spalte ist mit "Gruppenzuordnung" beschriftet, eine zweite mit "PAL-Zeilen", eine dritte mit "PAL-Zeilen, Zeilenpolarität", eine vierte mit "eingefügte PAL-Zeilen", eine fünfte mit "eingefügte PAL-Zeilen, Zeilenpolarität", eine sechste mit "HDTV-Zeilen", eine siebte mit "HDTV-Zeilen, Zeilenpolarität", eine achte mit "PAL-Zeilen gesamt, nach Zeilenvertauschung", und eine neunte mit "PAL-Zeilen, Zeilenpolarität, nach Zeilenvertauschung". Diese Spalteneinteilung ist in den nachfolgenden Ausführungsbeispielen analog verwendet, weshalb dort nicht mehr näher auf sie eingegangen wird, falls es nicht für das Verständnis zwingend notwendig ist.

Die Spalten zwei und drei beziehen sich auf dasjenige System, aus dem heraus die Konvertierung durchgeführt werden soll. Die Spalten 6 und 7 beziehen sich auf dasjenige System, in das die Konvertierung durchgeführt werden soll. Angegeben sind jeweils die Zeilennummern und die jeweils zugehörigen Polarisationsrichtungen.

In den Spalten vier und fünf ist angegeben, welche Zeilen mit welcher Polarisationsrichtung eingefügt werden sollen.

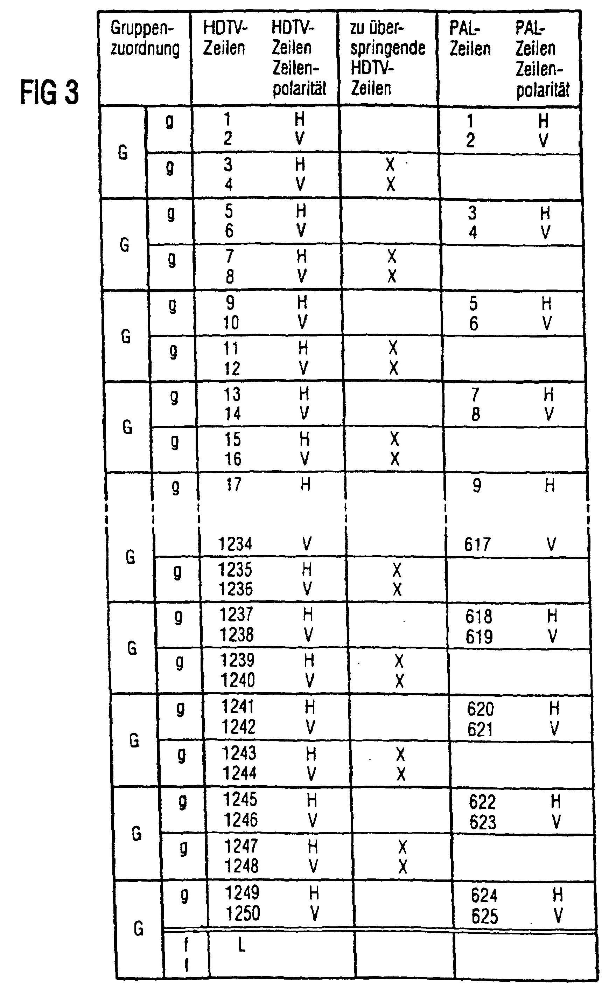

In der Figur 3 ist an dieser Stelle nur eine Spalte angegeben, weshalb die nachfolgenden Spalten gegenüber den anderen Figuren eine um eins niedrigere Nummer aufweisen. Das heisst im Detail, dass die Spalten sechs und sieben in der Figur 3 Spalten 5 und 6 sind. Dies gilt es bei einem Vergleich der verschiedenen Figuren miteinander zu berücksichtigen.

Gegenüber den anderen Figuren ist in der Spalte vier der Figur 3 auch nicht angegeben, welche Zeilen eingefügt werden sollen, sondern, welche Zeilen übersprungen werden sollen. In der Figur 3 geht es nicht um eine Zeilenausdehnung sondern um eine Zeilenreduzierung. Da es in der Figur 3 um eine Zeilenreduzierung geht, ergibt sich das neue System bereits aus den verbleibenden Zeilen des Ausgangssystems. Die Spalten acht und neun, die in der Figur 3 die Spalten sieben und acht wären, sind daher in der Figur 3 weggelassen.

Wie bereits erwähnt, liegt der Figur 2 eine Konvertierung von einem PAL-System in ein HDTV-System zugrunde. Zu konvertieren sind daher Zeilen 1 bis 625 mit abwechselnd H und V polarisierten Zeilen zu Zeilen 1 bis 1250 mit ebenfalls abwechselnd H und V polarisierten Zeilen. Das Ausgangssystem weist also n Zeilen auf, während das Zielsystem m Zeilen aufweist.

Zur Bewerkstelligung der Konvertierung ist es notwendig, die n Ausgangszeilen in erste Gruppen g zusammenzufassen. Die Größe der ersten Gruppen g wird durch die Zahl n' bestimmt, die aus dem Quotienten m'/n' hervorgeht, wobei der Quotient m'/n' wiederum aus dem maximal gekürzten Quotienten m/n hervorgeht.

Im Ausführungsbeispiel gemäß der Figur 2 gilt daher folgende Zuordnung: m/n = 1250/625. Der mit 625 gekürzte Bruch m'/n' = 2/1, woraus folgt, dass n' gleich 1 ist.

Die ersten Gruppen g weisen daher jeweils eine Zeile auf.

In einem weiteren Verfahrensschritt werden jeweils zwei aufeinanderfolgende erste Gruppen g zu jeweils einer zweiten Gruppe G zusammengefasst. Mit einer Ausgangszeilenzahl von 625 und jeweiligen zwei zeiligen zweiten Gruppen G bleibt die letzte erste Gruppe g ohne eine zweite erste Gruppe g. Um mit dieser Gruppe g eine zweite Gruppe G bilden zu können, ist es notwendig, vorübergehend eine fiktive erste Gruppe f einzuführen, die eine Zeilenzahl entsprechend einer regulären ersten Gruppe g aufweist, jedoch jeweils ohne Inhalt. Die Zeilen der fiktiven Gruppe f sind sogenannte Leerzeilen L, das heisst, diese Zeilen dienen nicht für eine Übertragung von Bildinformationen sondern lediglich dazu, das allgemeine Konvertierungsverfahren in jedem Verfahrensstadium anwenden zu können. Wie das vorliegende Ausführungsbeispiel zeigt, wären ansonsten in einigen Fällen Sonderregelungen zu beachten, um letztlich auf das Endergebnis zu kommen.

Nachdem die Ausgangszeilen in zweite Gruppen G eingeteilt worden sind, muss spätestens jetzt geprüft werden, wieviel Zeile bei der Konvertierung eingefügt bzw. übersprungen werden müssen. Zeilen müssen eingefügt werden, wenn eine Konvertierung zu einer größeren Zeilenzahl hin erfolgen soll. Zeilen müssen übersprungen werden, wenn eine Konvertierung zu einer kleineren Zeilenzahl hin erfolgen soll.

Die Beziehung |p|=m'-n' gibt an, wieviel Zeilen hälftig pro zweite Gruppen G eingefügt bzw. übersprungen werden müssen. Hälftig sagt aus, dass tatsächlich pro zweite Gruppe G 2*|p|, im Ausführungsbeispiel gemäß der Figur 2 als 2*1=2 Zeilen, eingefügt bzw. übersprungen werden müssen. Das Vorzeichen der Differenz m'-n' gibt dabei an, ob Zeilen eingefügt oder übersprungen werden müssen. Bei einer positiven Differenz sind Zeilen einzufügen, bei einer negativen Differenz sind Zeilen zu überspringen.

Im Ausführungsbeispiel gemäß der Figur 2 ist |p|=1 und ist m'-n'=+1, das heisst, dass pro zweite Gruppen G 2 Zeilen eingefügt werden müssen.

Unabhängig von der Anzahl der pro zweite Gruppen G einzufügenden bzw. zu überspringenden Zeilen müssen jeweils zwei aufeinanderfolgende Zeilen von einer Einfügung bzw. einem Überspringen betroffen sein.

Gemäß der Figur 2 sind in den jeweils zweiten Gruppen G nur jeweils zwei Zeilen enthalten und müssen jeweils zwei Zeilen eingefügt werden, so dass jeweils in jeder zweiten Gruppe G jeweils jede Zeile von einer Einfügung betroffen ist.

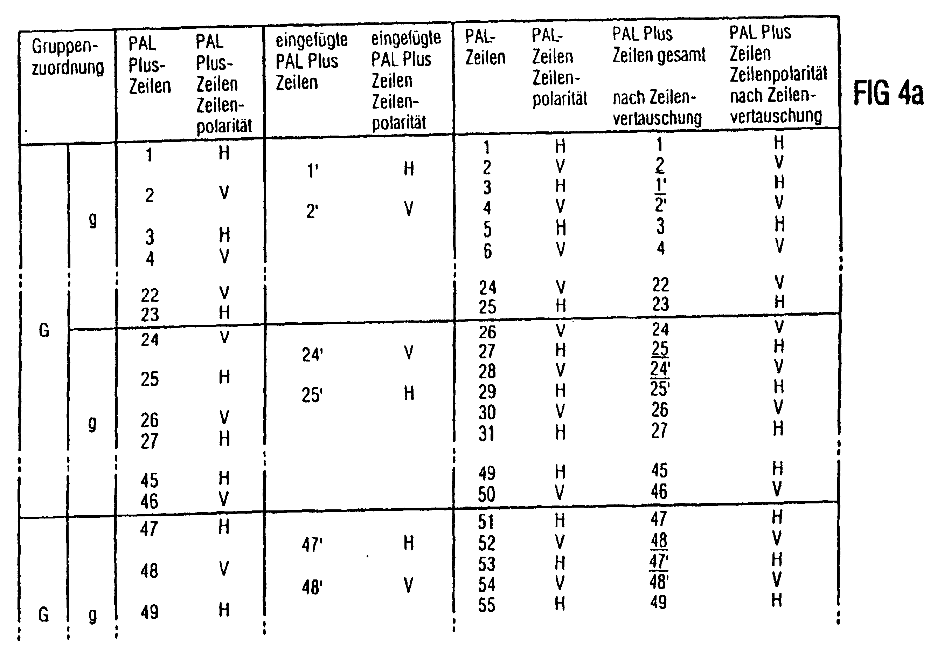

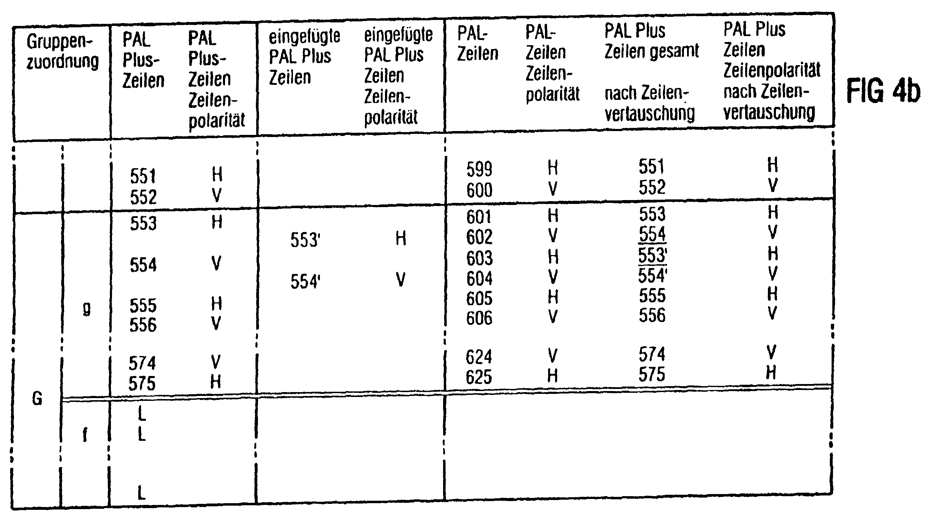

In der Figur 4 ist ein Beispiel aufgezeigt, nach dem in jeder zweiten Gruppe G vier Zeilen einzufügen sind. Die zweiten Gruppen G setzen sich dabei aus jeweils zwei erste Gruppen g zusammen, die jeweils 23 Zeilen umfassen.

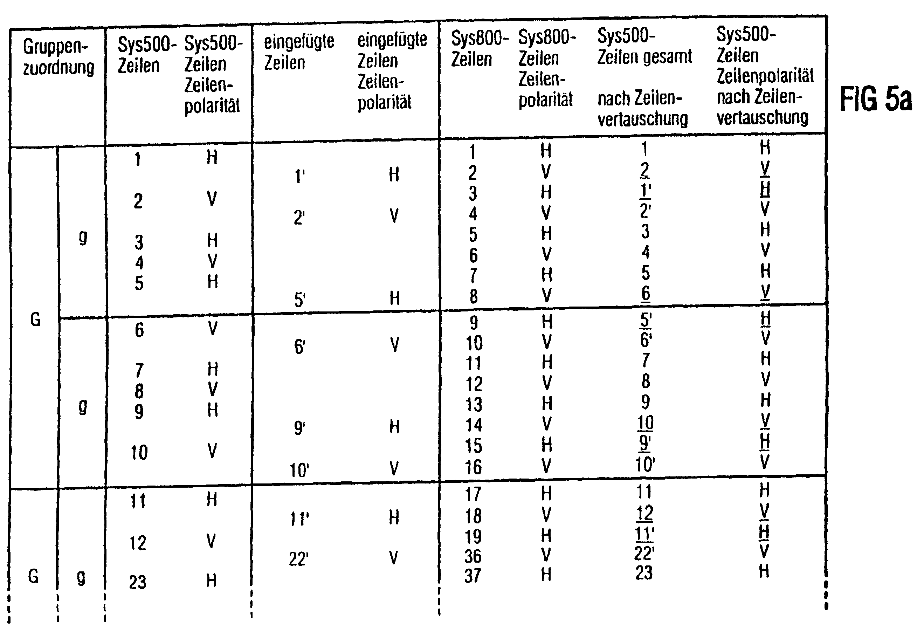

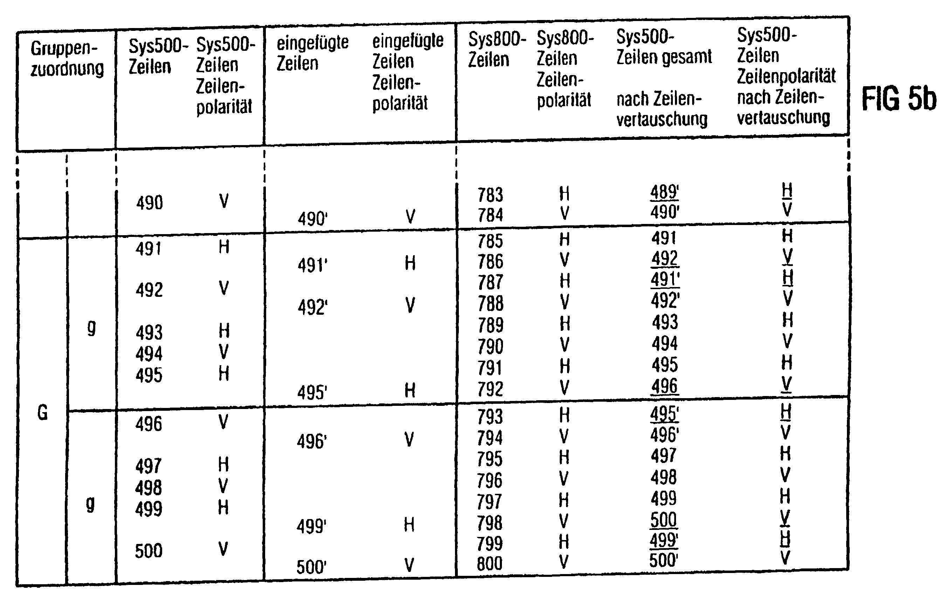

In der Figur 5 ist ein Beispiel aufgezeigt, nach dem in jeder zweiten Gruppe G sechs Zeilen einzufügen sind. Die zweiten Gruppen G setzen sich dabei aus jeweils zwei erste Gruppen g zusammen, die jeweils 5 Zeilen umfassen.

Eine Einfügung bzw. ein Überspringen von Zeilen umfasst aber trotzdem jeweils zwei aufeinanderfolgende Zeilen. Zu beachten ist, dass bei einem ungeraden |p| das durch 2*|p| ermittelte Paar einzufügender bzw. zu überspringender Zeilen in der Weise aufgeteilt wird, dass im Bereich des Stoßes der beiden innerhalb einer zweiten Gruppe G aneinanderstoßenden ersten Gruppen g einmal in der einen ersten Gruppe g die letzte noch nicht von einer Einfügung bzw. einem Überspringen betroffene Zeile und einmal in der anderen ersten Gruppe g die erste noch nicht von einer Einfügung bzw. einem Überspringen betroffene Zeile von einer Einfügung bzw. einem Überspringen betroffen ist. Ansonsten können die paarweisen Zeilen innerhalb der zweiten Gruppen G beliebig ausgewählt werden.

Wie bereits erwähnt, ist im Ausführungsbeispiel gemäß der Figur 2 jeweils jede Zeile innerhalb einer zweiten Gruppe G von einer Einfügung betroffen. Angezeigt ist dies in den Spalten vier und fünf, wobei die eingefügten Zeilen mit 1' bis 625' bezeichnet sind. Daneben ist jeweils die der jeweiligen eingefügten Zeile zugrundeliegende Polarisationsrichtung angegeben. Im einzelnen ist nach der PAL-Zeile 1 mit der Polarisationsrichtung H die PAL-Zeile 1' mit der Polarisationsrichtung H eingefügt und so weiter, bis zur letzten PAL-Zeile 625 mit der Polarisationsrichtung H, nach der die PAL-Zeile 625' mit der Polarisationsrichtung H eingefügt ist.

Bei den eingefügten Zeilen kann es sich gemäß einer vorteilhaften Weiterbildung der Erfindung entweder um eine Kopie einer jeweils vorausgehenden Zeile oder um eine aus einer vorausgehenden und einer nachfolgenden Zeile interpolierten Zeile handeln. Die Polarisation entspricht der kopierten oder der vorausgehenden Zeile.

Nachdem Zeilen eingefügt worden sind, ist zwar von der Zeilenzahl her eine Konvertierung gegeben, nicht aber von der abwechselnden Polarisierung. Um die richtige abwechselnde Polarisierung zu erhalten, sind abschließend jeweils die beiden innen liegenden Zeilen von vierzeiligen Gruppen, die sich aus den beiden von einer Einfügung betroffenen Zeilen und den beiden eingefügten Zeilen zusammensetzen, in ihrer Reihenfolge gegenseitig zu vertauschen.

In der Figur 2, wie in den Figuren 4 und 5, ist dies aus den letzten Spalten acht und neun zu ersehen. Dabei sind die jeweils von einer Vertauschung betroffenen Zeilen mit Unterstrichen gekennzeichnet.

Nach dem Zeilenvertauschungsverfahren ist die Konvertierung abgeschlossen. Aufgrund des Konvertierungsverfahren hat sich in der Figur 2 der letzten Zeile eine Leerzeile ergeben, die sich aber in der Realität nicht bemerkbar macht. Die Leerzeile stammt aus der angehängten fiktiven ersten Gruppe f, die sich an den Bildschirmdarstellungsbereich anschließt. Das Ende des Bildschirmdarstellungsbereichs ist durch einen Doppelstrich markiert. Durch die notwendige Zeilenvertauschung über die Grenze des Bildschirmdarstellungsbereichs hinweg kam die Leerzeile L in den Bildschirmdarstellungsbereich herein. Dagegen ist die letzte eingefügte Zeile 625' aus dem Bildschirmdarstellungsbereich herausgefallen. Die Vertauschung der Zeilen ist aber notwendig, um die richtige Polarisierungszeile im Bildschirmdarstellungsbereich zu erhalten.

Figur 4 und Figur 5 entsprechen der Figur 2 mit dem Unterschied, dass in Figur 4 eine Konvertierung von einem PAL Plus-Bild mit 575 Zeilen auf ein PAL-Bild mit 625 Zeilen und in Figur 5 eine Konvertierung von einem beispielhaft angenommenen Bild mit 500 Zeilen auf ein beispielhaft angenommenes Bild mit 800 Zeilen durchgeführt wird. In Figur 4 umfassen daher die ersten Gruppen g 23 Zeilen und in Figur 5 5 Zeilen. In Figur 4 ist zwar am Ende des Bildschirmdarstellungsbereiches eine fiktive Gruppe f anzunehmen, die sich aber nicht auswirkt. In Figur 5 ist eine solche fiktive Gruppe nicht notwendig, da die Anzahl der ersten Gruppen g gerade ist. Fiktive Gruppen sind daher in der Realität nur notwendig, wenn die Anzahl der ersten Gruppen g und |p| jeweils ungerade sind. In diesem Sinne ist die Figur 4 ein Beispiel für eine ungerade Anzahl von ersten Gruppen und ein geradzahliges |p|. Figur 5 ist dagegen ein Beispiel für eine gerade Anzahl von ersten Gruppen und ein ungeradzahliges |p|.

Die Besonderheit bei einem ungeradzahligen |p| ist die Tatsache, dass hier beim Zeilen Hinzufügen innerhalb einer zweiten Gruppe G auf jeden Fall die letzte Zeile der einen zu der betreffenden zweiten Gruppe G gehörenden ersten Gruppe g, die noch nicht von einem Einfügen oder einem Überspringen einer Zeile betroffen war, und die erste Zeile der anderen zur betreffenden zweiten Gruppe G gehörenden ersten Gruppe g, die ebenfalls noch nicht von einem Einfügen oder Überspringen einer Zeile betroffen war, von einer Einfügung bzw. einem Überspringen betroffen ist.

Wichtig ist also hier die Tatsache, dass bei der Zeileneinfügung, die ja immer doppelt zu geschehen hat, die eine Zeileneinfügung in der einen ersten Gruppe g und die andere Zeileneinfügung in der anderen ersten Gruppe g einer zweiten Gruppe G zu erfolgen hat. Dabei muss insgesamt erfüllt sein, dass immer zwei aufeinanderfolgende Zeilen von einer Zeileneinfügung betroffen sind.

Bezogen auf die Figur 5, bei der von einer Zeileneinfügung die Zeilen 1 und 2, 5 und 6 und 9 und 10 betroffen sind, könnten auch beispielsweise die Zeilen 3 und 4, 5 und 6 und 7 und 8 von einer Zeileneinfügung betroffen sein, ohne die geforderten Kriterien zu verletzen.

Vorteilhaft jedoch ist, einzufügende Zeilen innerhalb der zweiten Gruppen G so zu verteilen, dass sich insgesamt eine möglichst gleichmäßige Aufteilung von eingefügten Zeilen ergibt.

Entsprechendes gilt für das Weglassen von Zeilen. In der Figur 3 ist ein Beispiel angegeben, bei dem die Konvertierung aus Weglassen von Zeilen besteht.

In der Figur 3 wird eine Konvertierung von einem HDTV-Bild mit 1250 Zeilen zu einem PAL-Bild mit 625 Zeilen durchgeführt. Gemäß der oben beschriebenen Forderungen ergeben sich hier erste Gruppen g mit 2 Zeilen und müssen pro zweite Gruppen G 2 Zeilen übersprungen werden. Da zudem zu beachten ist, dass immer zwei aufeinanderfolgende Zeilen von einer Zeileneinfügung bzw. einem Zeilen Überspringen betroffen sein müssen, kann letztlich das Schema der Figur 3 herangezogen werden, die Konvertierung von dem einen System in das andere System durchzuführen. In der Figur 3 sind dazu jeweils die letzten beiden Zeilen der zweiten Gruppe G gewählt worden. Es hätten aber auch die mittleren beiden Zeilen oder die ersten beiden Zeilen gewählt werden können. Eine Beschränkung auf jeweils die ersten, mittleren oder letzten beiden Zeilen pro zweiter Gruppe G ist nicht zwingend erforderlich aber wegen der gleichmäßigen Verteilung und dem damit gewonnenen besseren Bild vorteilhaft.

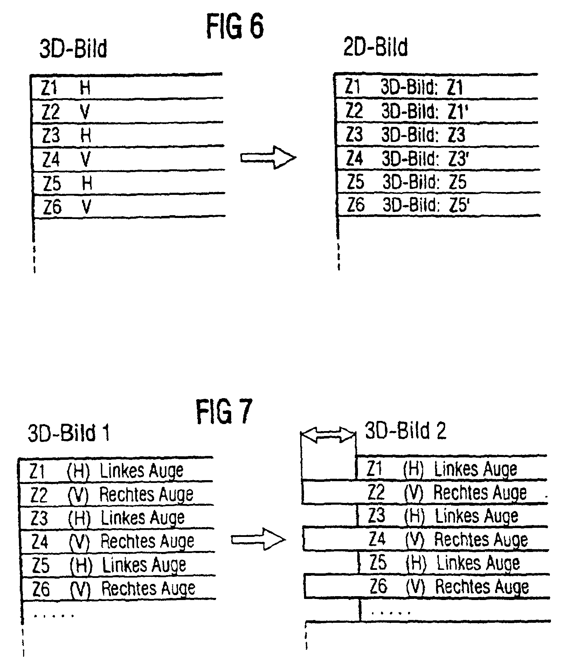

Figur 6 zeigt ein Beispiel für eine Konvertierung von einem dreidimensionalen Bild in ein zweidimensionales Bild. Da hier die Zeilenzahl konstant bleibt, genügt es, wenn beispielsweise jede ungerade oder jede gerade Zeile kopiert wird. Die Zeilenpolarisation spielt hierbei keine Rolle.

Figur 7 zeigt, wie der dreidimensionale Seheffekt bei einem mittels des Zeilenpolarisationsverfahrens erzeugter dreidimensionaler Bilder beeinflusst werden kann. Durch Verschieben der Zeilen für das Halbbild des einen Auges gegen die Zeilen für das Halbbild des anderen Auges wird die Tiefenwirkung beim dreidimensionalen Sehen in gewissem Umfang erhöht und umgekehrt.

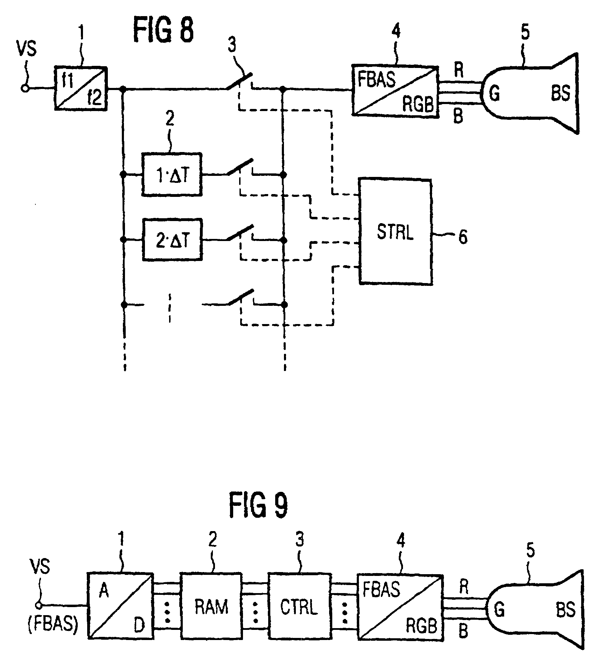

Die Figuren 8 und 9 zeigen Prinzipschaltbilder von Schaltungsanordnungen, mittels denen die Konvertierung dreidimensionaler Bilder von einer Zeilenauflösung zu einer anderen Zeilenauflösung gemäß dem vorbeschriebenen Verfahren durchgeführt werden kann. Figur 8 zeigt dabei ein Ausführungsbeispiel für eine analoge Schaltungsanordnung, während die Figur 9 ein Ausführungsbeispiel für eine digitale Schaltungsanordnung zeigt.

In Figur 8 wird in einem Frequenzwandler 1 durch eine Frequenzumschaltung von beispielsweise der Frequenz f1 nach der Frequenz f2 eine Konvertierung der Zeilenzahl durchgeführt. Mittels der Steuerelektronik 6 werden elektronische Schalter 3 betätigt, die mittels mindestens einer Verzögerungsleitung 2 Signale mit vorgegebener Zeitverzögerung auf den Ausgang 4, 5 schalten. Zur gleichen Zeit wird dabei je ein Signal geschaltet. Dadurch ist es möglich, Zeilen zu verdoppeln (1*▲T) oder zu vertauschen (2*▲T).

In der Figur 9 wird das Eingangssignal VS digitalisiert und es wird mindestens ein Bild zur gleichen Zeit im RAM-Speicher 2 abgelegt. Mittels des Controllers 3 werden die abgespeicherten Bilder in von der Abspeicherung unabhängiger Geschwindigkeit abgeholt und an den Digital/Analog-Wandler 4 gegeben, der daraus ein Videosignal neuer Auflösung generiert und an den Bildschirm 5 weiter gegeben. Für die 3D-Konvertierung im Zusammenhang mit der Zeilenpolarisation werden durch den Controller 3 außerdem die abgespeicherten Zeilen in unterschiedlicher Reihenfolge aus dem Speicher geholt, wodurch die Zeilenverdoppelung und -vertauschung realisiert wird.

Bei reinen digitalen Systemen, bei denen das Videosignal VS schon digitalisiert vorliegt, und bei denen auch der Bildschirm 5 digitale Signale verarbeiten kann, können die Komponenten 1 und 4 entfallen.

## Patentansprüche

1. Verfahren zum Konvertieren des Bildformates von n-zeiligen, mit Zeilenpolarisation hergestellten dreidimensionalen elektronischen Bildern in m-zeilige Bilder, deren jeweiligen zwei unmittelbar benachbarten Zeilen beim Sehen jeweils abwechselnd in eine erste und zweite Richtung polarisiert sind, wobei alle in die erste Richtung polarisierten Zeilen zur Darstellung eines ersten Teilbildes und alle in die zweite Richtung polarisierten Zeilen zur Darstellung eines zweiten Teilbildes zweier für ein dreidimensionales Sehen notwendiger Teilbilder verwendet sind, **gekennzeichnet durch**
- einen Verfahrensschritt, in dem ein aus den Werten n und m gebildeter Bruch in der Form m/n soweit als möglich ganzzahlig zu der Form m'/n' gekürzt wird,
- einen Verfahrensschritt, in dem die Zeilen des zu konvertierenden Bildes in erste Gruppen (g) eingeteilt werden mit einer jeweiligen Zeilenzahl n',
- einen Verfahrensschritt, bei dem jeweils 2 aneinander stoßende Gruppen (g) zu jeweils zweite Gruppen (G) zusammengefasst werden, wobei eine letzte einzeln zurückbleibende erste Gruppe (g) mit einer gleich großen fiktiven Leergruppe (f) mit lauter Leerzeilen (L) zu einer letzten zweiten Gruppe (G) zusammengefasst wird,
- einen Verfahrensschritt, in dem gemäß der Formel |p| = |m'-n'| die bei der Konvertierung pro zweite Gruppen (G) jeweils zweimal einzufügenden (bei m'>n') bzw. zu überspringenden (bei m'<n') |p| Zeilen ermittelt werden,
- einen Verfahrensschritt, bei dem jeweils in jeder der zweiten Gruppe (G) zweimal |p| Zeilen eingefügt (bei m'>n') bzw. übersprungen (bei m'<n') werden in der Weise, dass immer zwei aufeinanderfolgende Zeilen von einer Einfügung bzw. einem Überspringen betroffen sind und dass bei einem ungeraden |p| im Bereich des Scoßes der aneinander stoßenden ersten Gruppen (g) einer jeweiligen zweiten Gruppe (G) einmal in der einen ersten Gruppe (g) die letzte noch nicht von einer Einfügung bzw. einem Überspringen betroffene Zeile von einer Einfügung bzw. einem Überspringen betroffen ist und einmal in der anderen Gruppe die erste noch nicht von einer Einfügung bzw. einem Überspringen betroffene Zeile von einer Einfügung bzw. einem Überspringen betroffen ist, und
- einen Verfahrensschritt, bei dem nach einer Hinzufügung von Zeilen zu jeweils zwei aufeinanderfolgenden Zeilen der zweiten Gruppe (G) die jeweils beiden innen liegenden Zeilen der auf diese Weise jeweils entstehenden 4-zeiligen Zeilengruppen in der Reihenfolge gegeneinander vertauscht werden.

2. Verfahren nach Anspruch 1, **dadurch gekennzeichnet, dass** die eingefügten Zeilen von vorausgehenden bzw. nachfolgenden Zeilen kopiert werden.

3. Verfahren nach Anspruch 1, **dadurch gekennzeichnet, dass** die eingefügten Zeilen aus vorausgehenden und nachfolgenden Zeilen interpoliert werden.

4. Verfahren nach einem der vorherigen Ansprüche, **dadurch gekennzeichnet, dass** die innerhalb einer zweiten Gruppe (G) von einer Hinzufügung bzw. von einem Überspringen betroffenen Zeilen innerhalb der jeweiligen zweiten Gruppe (G) gleichmäßig verteilt ausgewählt werden.

5. Verfahren nach einem der vorherigen Ansprüche, **dadurch gekennzeichnet, dass** zu einer Einstellung des dreidimensionalen Seheffektes die in die eine Richtung polarisierten Zeilen gegenüber die in die andere Richtung polarisierten Zeilen in der Ebene gegeneinander verschoben werden.

6. Verfahren nach einem der vorherigen Ansprüche, **dadurch gekennzeichnet, dass** zum Umschalten von einem dreidimensionale zu einem zweidimensionalen Bild ein Modus eingestellt wird, in dem eine jede gerade bzw. ungerade Zeile mit dem Inhalt einer jeweils vorangegangenen Zeile überschrieben wird.

7. Schaltungsanordnung konfiguriert zur Durchführung des Verfahrens nach einem der Ansprüche 1 bis 6 mit Mitteln zur Darstellung eines elektronisch unter Anwendung eines Zeilenpolarisationsverfahrens erzeugten dreidimensionalen Bildes aus einem an einem Eingang anliegenden Videosignals (VS), **dadurch gekennzeichnet, dass** ein Frequenzwandler (1) vorgesehen ist, dessen eingestellte Frequenz die Anzahl der dargestellten Zeilen bestimmt, dass neben dem direkten Weg des am Eingang anliegenden Videosignals (VS) zur Bilddarstellung mindestens eine jeweils einen eigenständigen Verzögerungswert aufweisende parallele Verzögerungsleitung (2) mit gesteuertem Schalter (3) zum Ein- bzw. Ausschalten der jeweiligen Verzögerungsleitung (2) vorgesehen ist, und dass eine die Schalter (3) der Verzögerungsleitungen (2) steuernde Steuerelektronik 6 vorgesehen ist, durch dessen Steuerung der Schalter (3) Bildzeilen gegebenenfalls vertauscht sind.

8. Schaltungsanordnung konfiguriert zur Durchführung des Verfahrens nach einem der Ansprüche 1 bis 6 mit Mitteln zur Darstellung eines elektronisch unter Anwendung eines Zeilenpolarisationsverfahrens erzeugten dreidimensionalen Bildes aus einem an einem Eingang anliegenden Videosignals (VS), **dadurch gekennzeichnet, dass** ein digitaler Schreib-/Lesespeicher (RAM) für ein gleichzeitiges Speichern wenigstens eines dreidimensionalen Bildes in digitaler Form vorgesehen ist, und dass eine Controller-Schaltung (CTRL) vorgesehen ist, die die abgespeicherten Bilder in einer von der Abspeicherung unabhängigen Geschwindigkeit abholt, dabei abgespeicherte Zeilen gegebenenfalls in einer unterschiedlichen Reihenfolge ausliest und zur Bilddarstellung weiterleitet.

## Claims

1. Method for converting the picture format of n-line, three-dimensional electronic pictures produced by line polarization into m-line pictures whose respective two directly adjacent lines, in the context of vision, are in each case polarized alternately in a first and second direction, all the lines polarized in the first direction being used to display a first sub-picture and all the lines polarized in the second direction being used to display a second sub-picture of two sub-pictures required for three-dimensional vision, **characterized by**
- a method step in which a fraction formed from the values n and m in the form m/n is reduced as far as possible in integer fashion to give the form m'/n',
- a method step in which the lines of the picture to be converted are divided into first groups (g), with a respective line number n',
- a method step in which in each case 2 adjoining groups (g) are combined to form in each case second groups (G), a last individually remaining first group (g) being combined with an identically sized fictitious dummy group (f) with nothing but dummy lines (L) to form a last second group (G),
- a method step in which the |p| lines to be inserted (in the case of m'>n') or skipped (in the case of m'<n') twice in each case per second groups (G) during the conversion are determined in accordance with the formula |p|=|m'-n'|,
- a method step in which |p| lines are inserted (in the case of m'>n') or skipped (in the case of m'<n') twice in each case in each of the second group (G) in such a way that two successive lines are always affected by insertion or skipping, and that, in the case of an odd |p|, in the region of adjoinment of the adjoining first groups (g) of a respective second group (G), once in one first group (g), the last line as yet unaffected by insertion or skipping is affected by insertion or skipping and, once in the other group, the first line as yet unaffected by insertion or skipping is affected by insertion or skipping, and
- a method step in which, after addition of lines to in each case two successive lines of the second group (G), the two respective inner lines of the 4-line line groups respectively produced in this way are interchanged in their order relative to one another.

2. Method according to Claim 1, **characterized in that** the inserted lines are copied from preceding or succeeding lines.

3. Method according to Claim 1, **characterized in that** the inserted lines are interpolated from preceding and succeeding lines.

4. Method according to one of the preceding claims, **characterized in that** the lines affected by addition or by skipping within a second group (G) are selected such that they are distributed uniformly within the respective second group (G).

5. Method according to one of the preceding claims, **characterized in that**, for the purpose of setting the three-dimensional visual effect, the lines which are polarized in one direction are displaced relative to the lines polarized in the other direction in their plane relative to one another.

6. Method according to one of the preceding claims, **characterized in that**, in order to change over from a three-dimensional to a two-dimensional picture, a mode is set in which each even or odd line is overwritten with the content of a respective preceding line.

7. Circuit arrangement configured for carrying out the method according to one of Claims 1 to 6, having means for displaying a three-dimensional picture, generated electronically using a line polarization method, from a video signal (VS) present at an input, **characterized in that** a frequency converter (1) is provided, whose set frequency determines the number of lines displayed, **in that**, in addition to the direct path of the video signal (VS) present at the input for picture display purposes, provision is made of at least one parallel delay line (2), which in each case has an autonomous delay value, with a controlled switch (3) for switching the respective delay line (2) on and off, and **in that** an electronic control unit 6 is provided, which controls the switches (3) of the delay lines (2) and by whose control of the switches (3) picture lines are interchanged, if appropriate.

8. Circuit arrangement configured for carrying out the method according to one of Claims 1 to 6, having means for displaying a three-dimensional picture, generated electronically using a line polarization method, from a video signal (VS) present at an input, **characterized in that** provision is made of a digital random access memory (RAM) or simultaneous storage of at least one three-dimensional picture in digital form, and **in that** a controller circuit (CTRL) is provided, which fetches the stored pictures at a speed independent of the storage, in the process reads out stored lines, if appropriate in a' different order, and forwards them for picture display.

## Revendications

1. Procédé pour transformer le format d'images électroniques en trois dimensions à n lignes produites par polarisation horizontale en image à m lignes, dont respectivement deux lignes directement voisines lorsqu'on les voit sont polarisées respectivement de manière alternée dans une première et une seconde directions, toutes les lignes polarisées dans la première direction étant utilisées pour la représentation d'une première image partielle et toutes les lignes polarisées dans la seconde direction étant utilisées pour la représentation d'une seconde image partielle de deux images partielles nécessaires pour une vue en trois dimensions, **caractérisé par**
- un stade de procédé, dans lequel un fragment formé des valeurs n et m sous la forme m/n est raccourci autant que possible en nombre entier sous la forme m'/n',
- un stade de procédé, dans lequel les lignes de l'image à transformer sont réparties en des premiers groupes (g) ayant un nombre n' de lignes respectifs,
- un stade de procédé, dans lequel respectivement deux groupes (g) bout à bout sont rassemblés en respectivement des seconds groupes (G), un premier groupe (g) restant seul en dernier étant rassemblé avec un groupe (f) vide fictif de même dimension ayant des lignes (L) vides en un dernier second groupe (G),
- un stade de procédé, dans lequel on détermine suivant la formule |p| = |m'-n'|, les |p| lignes à ajouter respectivement deux fois (pour m'<n') ou à sauter (pour m'>n') lors de la transformation pour des seconds groupes (G),
- un stade de procédé, dans lequel respectivement dans chacun des seconds groupes (G), on ajoute deux fois |p| lignes (pour m'>n') ou on les saute (pour m'<n') de façon à ce que toujours deux lignes successives soient concernées par une addition ou par un saut et en ce que pour un |p| impair, dans la zone du contact des premiers groupes (g) bout à bout d'un second (G) groupe respectif, une fois dans un premier groupe (g) la dernière ligne pas encore concernée par une addition ou un saut est concernée par une addition ou par un saut et une fois dans l'autre groupe la première ligne qui n'est pas encore concernée par une addition ou par un saut est concernée par une addition ou par un saut et
- un stade de procédé, dans lequel, après une addition de lignes à respectivement deux lignes successives du second groupe (G), les rangs des respectivement deux lignes se trouvant à l'intérieur des groupes de quatre lignes ainsi formés sont échangés l'un avec l'autre.

2. Procédé suivant la revendication 1, **caractérisé en ce que** les lignes ajoutées sont copiées de lignes venant avant ou venant après.

3. Procédé suivant la revendication 1, **caractérisé en ce que** les lignes ajoutées sont interpolées à partir de lignes venant avant ou venant après.

4. Procédé suivant l'une des revendications précédentes, **caractérisé en ce que** les lignes concernées par une addition ou un saut au sein d'un second groupe (G) sont sélectionnées de manière uniformément répartie au sein du second groupe (G) respectif.

5. Procédé suivant l'une des revendications précédentes, **caractérisé en ce que** pour un réglage de l'effet visuel tridimensionnel, les lignes polarisées dans une direction sont décalées dans le plan par rapport aux lignes polarisées dans l'autre direction.

6. Procédé suivant l'une des revendications précédentes, **caractérisé en ce que** pour passer d'une image en trois dimensions à une image en deux dimensions, il est établi un mode dans lequel une ligne paire ou impaire est surchargée du contenu d'une ligne respectivement précédente.

7. Circuit configuré pour la mise en oeuvre du procédé suivant l'une des revendications 1 à 6, comprenant des moyens de représentation d'une image tridimensionnelle produite électroniquement en utilisant un procédé de polarisation horizontal à partir d'un signal (VS) vidéo appliqué à une entrée, **caractérisé en ce qu'**il est prévu un convertisseur (1) de fréquence dont la fréquence réglée détermine le nombre des lignes représentées, **en ce qu'**il est prévu, outre la voie directe du signal (VS) vidéo appliqué à l'entrée pour la représentation de l'image, au moins une ligne (2) à retard parallèle présentant respectivement une valeur de retard autonome et à interrupteur (3) commandé pour brancher et débrancher la ligne (2) respective à retard et **en ce qu'**il est prévu une électronique (6) de commande qui commande les interrupteurs (3) des lignes (2) à retard et par la commande des interrupteurs (3) de laquelle des lignes d'image sont éventuellement échangées.

8. Circuit configuré pour la mise en oeuvre du procédé suivant l'une des revendications 1 à 6, comprenant des moyens de représentation d'une image tridimensionnelle produite électroniquement en utilisant un procédé de polarisation horizontal à partir d'un signal (VS) vidéo appliqué à une entrée, **caractérisé en ce qu'**il est prévu une mémoire (RAM) numérique de lecture/écriture pour une mémorisation simultanée d'au moins une image tridimensionnelle sous forme numérique et **en ce qu'**il est prévu un circuit (CTRL) de contrôleur qui va chercher les images mémorisées à une vitesse indépendante de la mémorisation en fournissant les lignes mémorisées le cas échéant dans une succession différente et en les envoyant à la représentation d'image.
